# EUROPEAN PATENT SPECIFICATION

(11) **EP 4 079 540 B1**
(45) Date of publication and mention of the grant of the patent: **13.03.2024**
(21) Application number: 20902686.3
(22) Date of filing: 08.12.2020
(51) Int. Cl.: B60C 11/00, B60C 11/03, B60C 11/12

(54) **TIRE**
REIFEN
PNEUMATIQUE

(30) Priority: 19.12.2019 JP 2019229320
(43) Date of publication of application: 26.10.2022
(73) Proprietor: BRIDGESTONE CORPORATION, Chuo-ku Tokyo 104-8340 (JP)
(72) Inventor: KAJIYAMA Yuji, Tokyo 104-8340 (JP); TSURU Takahiro, Tokyo 104-8340 (JP)
(74) Representative: Marks & Clerk LLP
(86) International application number: PCT/JP2020/045577
(87) International publication number: WO 2021/124969

(56) References cited:
- EP-A1- 2 319 712
- EP-A1- 2 402 178
- EP-A2- 3 000 621
- WO-A1-2019/216323
- JP-A- H1 191 315
- JP-A- H09 193 617
- JP-A- H09 193 617
- JP-A- 2000 229 505
- JP-A- 2011 102 073
- JP-A- 2015 020 465
- JP-A- 2015 221 650
- JP-A- 2017 095 044

## Description

### [Technical Field]

The present invention relates to a tire suitable for traveling on an ice/snow road surface.

### [Background Art]

Conventionally, in a pneumatic tire (hereinafter, omitted as a "tire" when appropriate) such as a studless tire suitable for traveling on an ice/snow road surface, in order to secure driving performance on the ice/snow road surface (hereinafter, on-snow performance), the shape of a block in contact with the road surface is complicated and many fine grooves such as sipes are generally formed.

In such a tire, the block in the tread center region where the contact pressure is high and firmly grounded smoothly wear, while the block in the tread shoulder region where the contact pressure is liable to be low due to the crown shape of the tire is not firmly grounded, and uneven wear such as heel-and-toe wear is particularly easy to occur.

Therefore, there is known a structure in which a bottom-up portion is provided in a groove portion between adjacent blocks in the tire circumferential direction to connect the adjacent blocks (Patent literature 1). Attention is also drawn to the disclosures of JPH09-193617A, JPH11-91315A, EP2319712A1, EP2402178A1 and EP3000621A2, whereby JPH09-193617A is showing a tire with a tread having a rib-like land portion between circumferentially extending main grooves at the central part of the tread. This land portion further provides inclined width direction grooves communicating on one side with a circumferential groove and on the other side with a sipe, which ends within the land portion.

### [Citation List]

### [Patent Literature]

### [Patent Literature 1]

Japanese Unexamined Patent Application Publication No. 2001-277814

### [Summary of Invention]

However, the above-described structure in which a bottom-up portion for connecting adjacent blocks is provided is not necessarily appropriate in consideration of the influence on the environment, because the rubber volume simply increases and the rolling resistance (RR) increases. On the other hand, unless proper block rigidity is ensured, it is difficult not only to suppress uneven wear but also to demonstrate high on-snow performance (braking and driving performance, steering stability, etc.).

In addition, in recent years, braking performance on an ice road surface tended to be regarded as important in on-snow performance. Affinity with the anti-lock braking system (ABS) is also important for braking on ice road surfaces as ABS is frequently intervened.

Accordingly, an object of the present invention is to provide a tire capable of further enhancing on-snow performance, particularly braking performance in consideration of affinity with ABS, depending on the shape of the block itself.

The present invention provides a tire as claimed in claim 1.

### [Brief Description of Drawings]

FIG. 1 is a partial plan view of a tread of a pneumatic tire 10.
FIG. 2 is a cross-sectional view of the pneumatic tire 10 along the tire width direction and the tire radial direction.
FIG. 3 is a partial plan view of a tread 20 including a rib-like block 100, a block 200 and a block 300.
FIG. 4 is a partially enlarged plan view of a rib-like block 100.
FIGs. 5A and 5B illustrate the operation and effect of the rib-like block 100 according to the embodiment.

### [Modes for Carrying out the Invention]

Embodiments will be described below with reference to the drawings. It should be noted that the same functions and configurations are denoted by the same or similar reference numerals, and the description thereof is appropriately omitted.

### (1) Overall schematic configuration of the tire

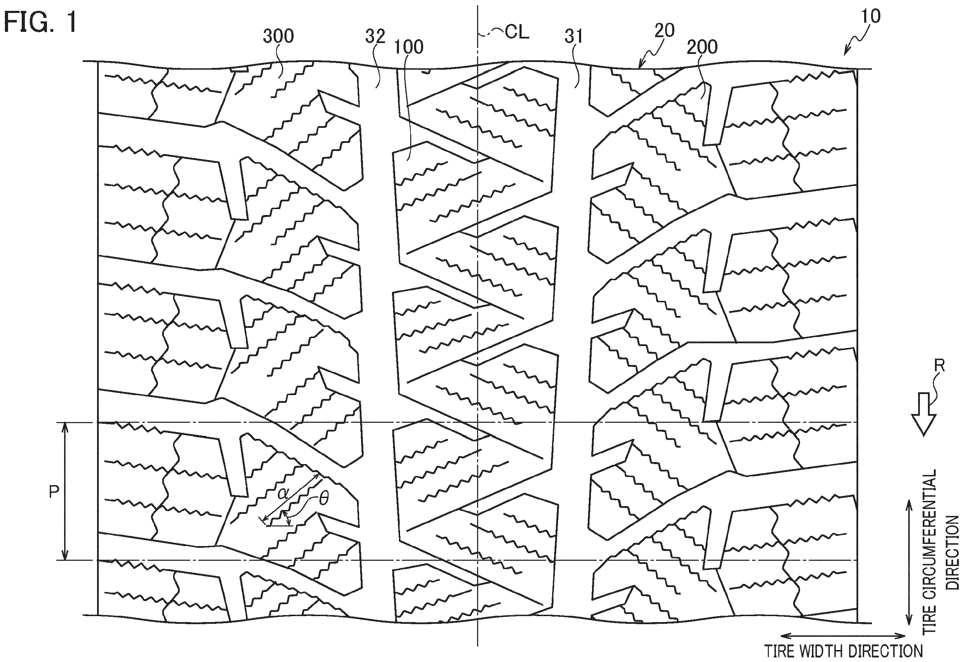

FIG. 1 is a partial plan view of a tread of the pneumatic tire 10 according to the present embodiment. As shown in FIG. 1, the pneumatic tire 10 includes a plurality of block rows partitioned by circumferential direction grooves.

The pneumatic tire 10 is a tire suitable for traveling on an ice/snow road surface and is called a studless tire or the like.

The studless tire may be referred to as a snow tire or a winter tire. Alternatively, the pneumatic tire 10 may be a so-called all-season tire usable not only in winter but also in all seasons.

The type of vehicle to which the pneumatic tire 10 is mounted is not particularly limited, but may be suitably used in general standard passenger car vehicles including sedans, wagons, hatchbacks, and the like.

The tread 20 is a portion in contact with the road surface. The tread 20 is provided with a plurality of blocks (which may be referred to as land blocks).

A rib-like block 100 is provided in a central region in the tire width direction including tire equatorial line CL. Specifically, the rib-like block 100 is partitioned by a circumferential direction groove 31 extending in the tire circumferential direction and a circumferential direction groove 32 extending in the tire circumferential direction. In this embodiment, the circumferential direction groove 31 constitutes a first circumferential direction groove, and the circumferential direction groove 32 constitutes a second circumferential direction groove.

The rib-like block 100 may not necessarily be provided at a position overlapping the tire equatorial line CL. The rib-like block 100 may be provided closer to the tire equatorial line CL than other blocks provided on the tread 20. The central region in the tire width direction including the tire equatorial line CL may be a region of about 40% of the ground contact width TW based on the tire equatorial line CL.

A block 200 is provided outside in the tire width direction of the circumferential direction groove 31. A block 300 is provided outside in the tire width direction of the circumferential direction groove 32. In this embodiment, the block 200 constitutes a first outside block. The block 300 constitutes a second outside block.

The circumferential direction groove 31 and the circumferential direction groove 32 are linear grooves (straight grooves) extending along the tire circumferential direction. The groove having such a shape may be referred to as a see-through shape or a see-through groove or the like because the groove can be seen to the tip when it is developed on a plane.

In this embodiment, the rotation direction R of the pneumatic tire 10 when the vehicle is mounted is designated. However, the rotation direction R of the pneumatic tire 10 may not necessarily be designated.

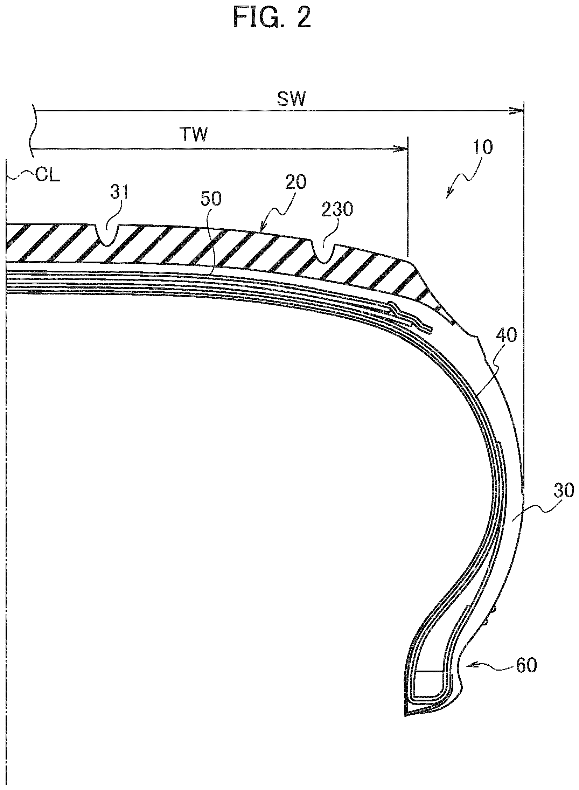

FIG. 2 is a cross-sectional view of the pneumatic tire 10 along the tire width direction and the tire radial direction. In FIG. 2, the cross sectional hatching is partially omitted.

As shown in FIG. 2, the pneumatic tire 10 includes the tread 20, a tire side portion 30, a carcass 40, a belt layer 50, a bead portion 60, and a belt reinforcing layer 70.

As shown in FIG. 2, the ratio TW/SW of the ground contact width TW of the pneumatic tire 10 and the maximum width SW of the pneumatic tire 10 is 0.75 or more and 0.95 or less.

The ground contact width TW (and the ground contact length to be described later) is the width of the ground contact portion of the tread 20 when the pneumatic tire 10 is set to normal internal pressure and normal load is applied.

In Japan, the normal internal pressure is the air pressure corresponding to the maximum load capacity in the JATMA (Japan Automobile Tire Manufacturers Association) YearBook, and the normal load is the maximum load capacity (maximum load) corresponding to the maximum load capacity in the JATMA YearBook. In addition, ETRTO in Europe, TRA in the United States, and other tire standards in other countries correspond to it.

In addition, in the present embodiment, the pneumatic tire 10 preferably has the numerical values of the block edge and the sipe edge within the range shown in Table 1.

**[Table 1]**

| Total amount of front and rear block edges perpitch [mm / 1 pitch] | Total amount of front and rear sipes edges per pitch [mm / 1 pitch] | Front and rear block edges per unit grounding length [mm / 1 pitch length (mm)] | Front and rearsipe edges per unit grounding length [mm / 1 pitch length (mm)] | Front and rear block edge / front and rear sipe edge per unit grounding length [Dimension less] |
|---|---|---|---|---|
| 150∼250 | 400∼480 | 3.9∼10 | 10.5∼18.5 | 0.21∼0.95 |

As shown in FIG. 1, when the number of sipes present in one pitch is N, the total amount of the front and rear sipe edges per pitch is calculated as N × αcos θ * (the number of sipes present in one pitch) for each sipe type and added together. θ is the inclination angle of the sipe with respect to the tire width direction, and α is the length of each sipe in the direction inclined by θ degrees.

The front and rear sipe edge per unit grounding length is the sum of N × αcos θ * (the number of sipes present in one pitch) calculated for each sipe type and divided by the pitch length.

The front and rear block edge is similar to the front and rear sipe edge, and the object is not the sipe but the edge portion of the block.

As shown in Table 1, the front and rear block edge / front and rear sipe edge per unit grounding length is preferably 0.21 to 0.95. In particular, the scratching effect (edge effect) of the road surface RD (not shown in FIG. 2, see FIGSs. 5A and 5B) by the block edge can be effectively improved by the edge component (edge pressure is high) of the block edge by setting the edge to 0.21 or more.

In addition, by making the amount 0.95 or less, the effect of removing the water film (which may be called the water removing performance) can be effectively enhanced by the edge component of the sipe. Thus, braking performance (on-ice braking performance) on an on-ice road surface is greatly improved.

It is more preferable that the front and rear block edge / front and rear sipe edge per unit grounding length is 0.35 to 0.65. The specific numerical range may vary slightly depending on the tire size, but the numerical range shown in Table 1 may be based on 215/55 R 17.

The pitch P shown in Table 1 and FIG. 1 may be interpreted as an interval (length) at which the same tread pattern is repeated in the tire circumferential direction. The tread pattern may be composed of a plurality of different pitches P. The unit grounding length may be interpreted as an arbitrary contact length based on the contact length at the normal internal pressure and the normal load. However, the unit grounding length is preferably equal to or less than the contact length at the normal internal pressure and the normal load.

The tire side portion 30 is continuous to the tread 20 and positioned inside in tire radial direction of the tread 20. The tire side portion 30 is an region from outside end in the tire width direction of the tread 20 to the upper end of bead portion 60. The tire side portion 30 may be called a side wall or the like.

The carcass 40 forms the skeleton of the pneumatic tire 10. In the present embodiment, the carcass 40 has a radial structure in which carcass cords (not shown) arranged radially along the tire radial direction are coated with a rubber material. However, it is not limited to the radial structure, and a bias structure in which the carcass cord is intersected with the tire radial direction may be used.

The belt layer 50 is provided inside in tire radial direction of the tread 20. The belt layer 50 may include a pair of crossing belt intersecting steel cords and a reinforcing belt provided in outside in the tire radial direction of the crossing belt. The crossing belt may be called as a main belt. An organic fiber cord may be used for the reinforcing belt.

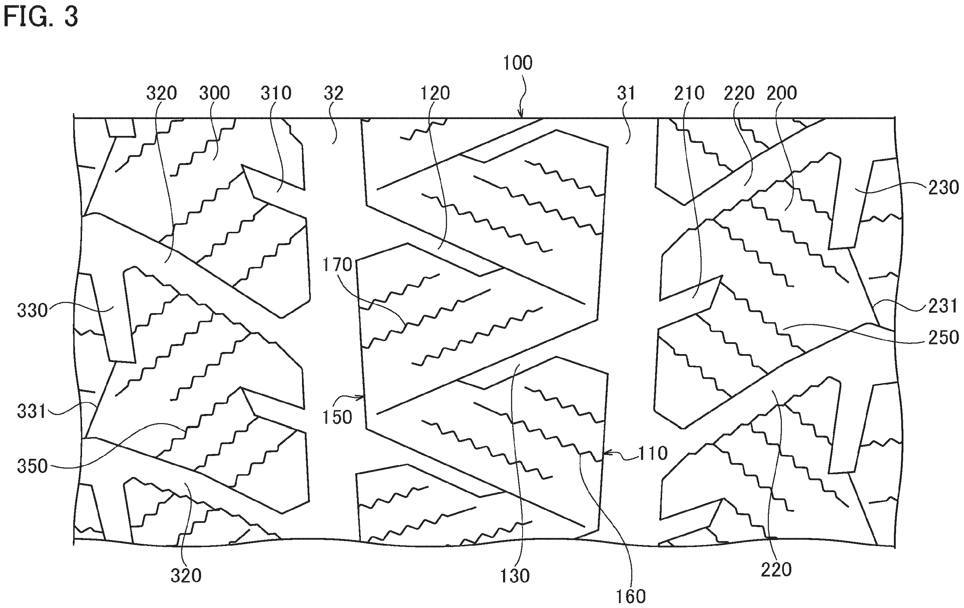

An outside end in the tire width direction of the belt layer 50 including the main belt may be positioned outside in the tire width direction than circumferential direction notch grooves 230, 330 (see also FIG. 3).

The bead portion 60 is continuous to the tire side portion 30 and positioned inside in tire radial direction of the tire side portion 30. The bead portion 60 is an annular shape extending in the tire circumferential direction.

The belt reinforcing layers 70 are provided at respective ends (may be referred to as tread shoulders) of the tire width direction outside of the belt layer 50. More specifically, the belt reinforcing layer 70 is provided so as to cover outside end of the belt layer 50 in the tire width direction. An organic fiber cord may be used for the belt reinforcing layer 70.

An inside end in the tire width direction of the belt reinforcing layer 70 is preferably positioned inside in the tire width direction than the ground contact end (position of the ground contact width TW) of the tread 20. The outside end in the tire width direction of the belt reinforcing layer 70 is preferably positioned outside in the tire width direction than the ground contact end (position of the ground contact width TW) of the tread 20.

### (2) Shape of the tread 20

Next, the shape of the tread 20, more specifically, the shape of each block provided on the tread 20 will be described. FIG. 3 is a partial plan view of the tread 20 including the rib-like block 100, the block 200, and the block 300.

As shown in FIG. 3, the rib-like block 100 has a block portion 110 and a block portion 150. The block portion 110 and the block portion 150 are alternately provided in the tire circumferential direction.

The rib-like block 100 is formed with an inclined width direction groove 120 and an inclined width direction groove 130 inclined with respect to the tire width direction.

The inclined width direction groove 120 extends in a first direction inclined with respect to the tire width direction. In the present embodiment, the inclined width direction groove 120 constitutes a first inclined width direction groove.

The inclined width direction groove 130 extends in a second direction inclined opposite to the inclined width direction groove 120 with respect to the tire width direction. In the present embodiment, the inclined width direction groove 130 constitutes a second inclined width direction groove.

Note that the first direction and the second direction are inclined with respect to the tire width direction, and it is sufficient that the angle (the acute angle side) formed with the tire width direction is approximately 45 degrees or less.

The block portion 110 is an area partitioned by the inclined width direction and groove 120 and the inclined width direction and groove 130 adjacent in the tire circumferential direction. Similarly, the block portion 150 is an area partitioned by the inclined width direction and groove 120 and the inclined width direction and groove 130 adjacent in the tire circumferential direction. However, as described above, since the inclination direction of the inclined width direction groove 120 and the inclined width direction groove 130 are different (the first direction and the second direction), the block portion 110 and the block portion 150 have a linearly symmetric shape when they are aligned side by side. That is, the block portion 150 has a shape in which the block portion 110 is inverted horizontally.

The block 200 and the block 300 are respectively provided outside in the tire width direction of the rib-like block 100. The rib-like block 100 may be referred to as a center block. The block 200 and the block 300 may also be referred to as shoulder blocks (or second blocks).

Specifically, the block 200 (the first outside block) is provided outside in the tire width direction of the rib-like block 100 via the circumferential direction groove 31. The block 300 (second outside block) is provided outside in the tire width direction of the rib-like block 100 via the circumferential direction groove 32.

A termination groove 210 communicating with the circumferential direction groove 31 and terminating in the block 200 is formed in the block 200. In this embodiment, the termination groove 210 constitutes a first termination groove.

The termination groove 210 is formed on an extension line along the inclined width direction groove 130. The extension line along the inclined width direction groove 130 may be interpreted as a straight line passing through the side wall of the inclined width direction groove 130 on the side of the block portion 110.

The plurality of blocks 200 are partitioned by width direction grooves 220. The circumferential direction notch groove 230 extending in the tire circumferential direction and having notched shape may be formed in the block 200. A circumferential direction sipe 231 extending in the tire circumferential direction and having linear shape may be formed in the circumferential direction notch groove 230. The dimension of the circumferential direction notch groove 230 along the tire circumferential direction is preferably 50% or less of the dimension along the tire circumferential direction of the block 200.

The circumferential direction notch groove 230 is a circumferential direction groove extending in the tire circumferential direction and formed most outside in the tire width direction.

The block 200 is formed with a plurality of zigzag sipes 250 which extend inclinedly in the tire width direction and are at least partially zigzag.

The block 300 has the same shape as the block 200. A termination groove 310 communicating with the circumferential direction groove 32 and terminating in the block 300 is formed in the block 300. In this embodiment, the termination groove 310 constitutes a second termination groove.

The termination groove 310 is formed on an extension line along the inclined width direction groove 120. The extension line along the inclined width direction groove 120 may be interpreted as a straight line passing through the side wall of the inclined width direction groove 120 on the side of the block portion 150.

The plurality of blocks 300 are partitioned by width direction grooves 320. A notched circumferential direction notch groove 330 extending in the tire circumferential direction may be formed in the block 300. A linear circumferential direction sipe 331 extending in the tire circumferential direction may be formed in the circumferential direction notch groove 330. The dimension of the circumferential direction notch groove 330 along the tire circumferential direction is preferably 50% or less of the dimension along the tire circumferential direction of the block 300.

The block 300 is formed with a plurality of zigzag sipes 350 which extend inclinedly in the tire width direction and are at least partially zigzag.

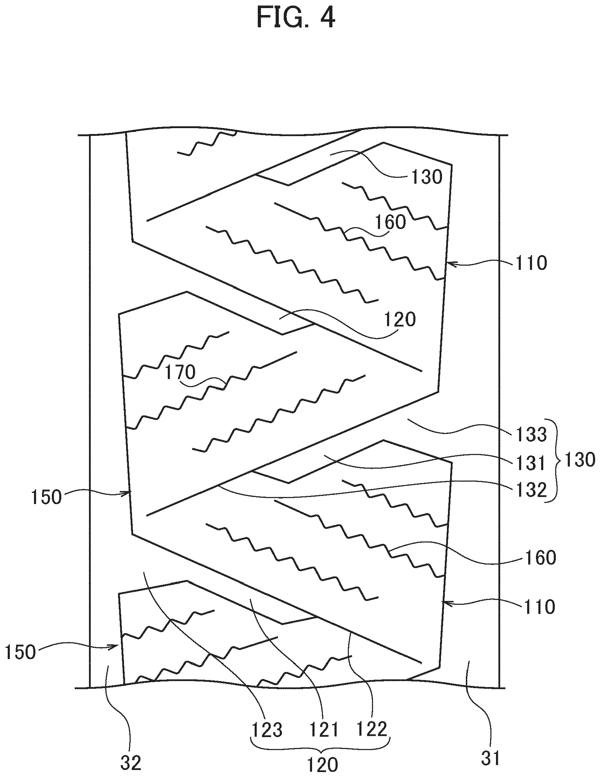

FIG. 4 is a partially enlarged plan view of the rib-like block 100. As described above, the rib-like block 100 includes a plurality of block portions 110 and a plurality of block portions 150.

A plurality of zigzag sipes 160 are formed in the block portion 110. The zigzag sipe 160 extends in the same direction (first direction) as the inclined width direction groove 120, and at least a part thereof is zigzag in a tread surface view. In this embodiment, the zigzag sipe 160 constitutes a first zigzag sipe.

A plurality of zigzag sipes 170 are formed in the block portion 150. The zigzag sipe 170 extends in the same direction (second direction) as the inclined width direction groove 130, and at least a part thereof is zigzag in a tread surface view. In this embodiment, the zigzag sipe 170 constitutes a second zigzag sipe.

At least either one of the zigzag sipe 160 and the zigzag sipe 170 may not necessarily be zigzag, and may have a shape close to a wavy shape with a curved peak portion.

The inclined width direction groove 120 has a narrow groove portion 121 and a sipe portion 122. The narrow groove portion 121 is a linear narrow groove narrower than the groove width of the circumferential direction groove 31 and the circumferential direction groove 32. In this embodiment, the narrow groove portion 121 constitutes the first narrow groove portion.

The sipe portion 122 is a sipe narrower than the groove width of the narrow groove portion 121. However, the sipe portion 122 may be wider than the groove width of the zigzag sipe 160 and the zigzag sipe 170. In this embodiment, the sipe portion 122 constitutes a first sipe portion.

The sipe portion 122 communicates with the narrow groove portion 121 and extends inclinedly in the tire width direction at the same inclination angle as the narrow groove portion 121. The sipe portion 122 is also linear.

At the end of the narrow groove portion 121 on the side of the circumferential direction groove 31, a widened section 123 having a widened groove width along the tire circumferential direction is formed. In this embodiment, the widened section 123 constitutes the first widened section.

As described above, the inclined width direction groove 120 formed of the narrow groove portion 121, the sipe portion 122 and the widened section 123 communicates with the circumferential direction groove 32.

The inclined width direction groove 130 has a narrow groove portion 131 and a sipe portion 132. The narrow groove portion 131 is a linear narrow groove narrower than the groove width of the circumferential direction groove 31 and the circumferential direction groove 32. In this embodiment, the narrow groove portion 131 constitutes a second narrow groove portion.

The sipe portion 132 is a sipe narrower than the groove width of the narrow groove portion 131. However, the sipe portion 132 may be wider than the groove width of the zigzag sipe 160 and the zigzag sipe 170. In this embodiment, the sipe portion 132 constitutes a second sipe portion.

The sipe portion 132 communicates with the narrow groove portion 131 and extends inclinedly in the tire width direction at the same inclination angle as the narrow groove portion 131. The sipe portion 132 is also linear.

At the end of the narrow groove portion 131 on the side of the circumferential direction groove 32, a widened section 133 having a widened groove width along the tire circumferential direction is formed. In this embodiment, the widened section 133 constitutes a second widened section.

As described above, the inclined width direction groove 130 formed of the narrow groove portion 131, the sipe portion 132 and the widened section 133 communicates with the circumferential direction groove 31.

As shown in FIG. 4, the inclined width direction groove 120, the plurality of zigzag sipes 160, the inclined width direction groove 130, and the plurality of zigzag sipes 170 are repeatedly formed in the tire circumferential direction (in the case of the tire extending from the bottom to the top in FIG. 4).

As described above, one end of the sipe portion 122 communicates with the narrow groove portion 121, and the other end of the sipe portion 122 terminates in the rib-like block 100 (block portions 110, 150) without communicating with the circumferential direction groove 31. Similarly, one end of the sipe portion 132 communicates with the narrow groove portion 131, and the other end of the sipe portion 132 terminates in the rib-like block 100 (block portions 110, 150) without communicating with the circumferential direction groove 32.

Further, the widened section 133 of the inclined width direction groove 130 may be positioned on the extension line along the sipe portion 122. The extension line along the sipe portion 122 may be interpreted as a straight line passing through the center of the groove width of the sipe portion 122.

Similarly, the widened section 123 of the inclined width direction groove 120 may be positioned on the extension line along the sipe portion 132.

### (3) Function and effects

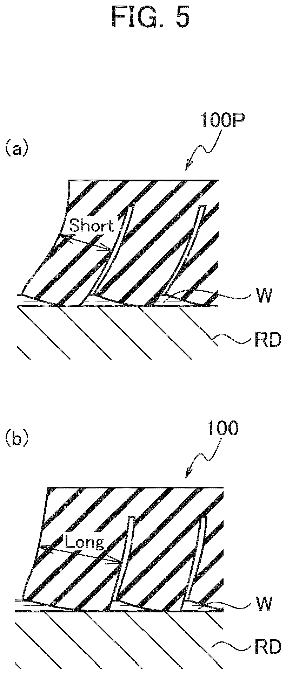

According to the embodiment described above, the following effects are obtained. FIGs. 5A and 5B are explanatory views of the operation and effect of the rib-like block 100 according to the present embodiment. Specifically, FIG. 5A is a diagram schematically showing a shape of a conventional general block 100 P at the time of on-ice braking. FIG. 5B is a diagram schematically showing a shape of the rib-like block 100 at the time of braking.

As described above, in the rib-like block 100, the inclined width direction groove 120 and the inclined width direction groove 130 are formed and divided into the block portion 110 and the block portion 150, but one end of the sipe portion 122 and the sipe portion 132 terminates in the rib-like block 100 and is not completely divided. Further, the interval at which the zigzag sipe 160 and the zigzag sipe 170 is formed is wider than that of the conventional general block 100 P. That is, the length from the end of the rib-like block 100 in the tire circumferential direction to the position where the sipe is formed is long.

Therefore, even when strong deceleration (G) is generated during braking on ice, since the block rigidity of the tire circumferential direction end portion of the rib-like block 100 is high, deformation such that the tread surface of the rib-like block 100 raises from the road surface RD is hardly caused.

On the other hand, in the case of the block 100 P, since the block rigidity of the tire circumferential end portion inevitably becomes low, the tread surface of the block 100 P is easily raised from the road surface RD, and the grounding property of the tire circumferential end portion of the block 100 P is lowered. Therefore, it is difficult to exhibit sufficient scratching effect (edge effect) and water removing performance by the tire circumferential direction end portion.

Without the anti-lock braking system (ABS), the deceleration G is momentarily high immediately after the start of braking, but then remains low until the tire is locked and the speed just before stopping is reached.

On the other hand, when ABS is provided, a high deceleration G occurs from immediately after the start of braking until the stop. Therefore, a large force is intermittently applied to the block of the tire.

In the case of the rib-like block 100, even when the ABS is operated as described above, deformation of the rib-like block 100, particularly deformation at the end portion in the tire circumferential direction, is suppressed, so that a sufficient ground contact area with the road surface RD can be ensured, and grounding property is not impaired. Thereby, sufficient edge effect and water removing performance can be exhibited.

That is, according to the pneumatic tire 10, the on-snow performance, especially the braking performance in consideration of the affinity with ABS, can be further enhanced by the shape of the block itself.

In this embodiment, the ratio TW/SW of the ground contact width TW of the pneumatic tire 10 and the maximum width SW of the pneumatic tire 10 is 0.75 to 0.95. Since the TW/SW is 0.75 or more, a sufficient ground contact area of the tread 20 can be secured, thereby contributing to the improvement of on-snow performance.

Since the TW/SW is 0.95 or less, heat generation of the tread 20 and the tire side portion 30 can be suppressed, and durability is not affected. Further, since a bottom-up portion for connecting the blocks is not provided, an increase in rolling resistance due to an increase in rubber volume can be avoided.

In the present embodiment, the widened section 123 and the widened section 133 are formed in the inclined width direction groove 120 and the inclined width direction groove 130, respectively.

Further, a termination groove 210 and a termination groove 310 are formed in the block 200 and the block 300 provided outside in the tire width direction of the rib-like block 100, respectively. The termination groove 210 (termination groove 310) is formed on an extension line along the inclined width direction groove 120 (inclined width direction groove 130).

Therefore, the edge effect and the snow pillar sharing force by the widened section 123 and the widened section 133 can be enhanced. Thus, the on-snow performance, especially the performance on the snow road surface can be improved.

### (4) Other Embodiments

Although the contents of the present invention have been described in accordance with the embodiments described above, it is obvious to those skilled in the art that the present invention is not limited to these descriptions and that various modifications and improvements are possible.

In the above-described embodiment, the inclined width direction groove 120 and the inclined width direction groove 130 have substantially the same shape, but the inclined width direction groove 120 and the inclined width direction groove 130 need not necessarily have the same shape. For example, any of the inclined width direction grooves may not have widened sections, and the length of the sipe portion and/or the narrow groove portion may be different.

Further, in the above-described embodiment, the rotation direction R of the pneumatic tire 10 is designated, but as described above, the rotation direction R may not necessarily be designated. When the rotation direction R is not designated, for example, a tread pattern in which either one of the block 200 and the block 300 is inverted may be used.

Although the invention has been described in detail above, it will be apparent to those skilled in the art that the invention is not limited to the embodiments described herein. This invention may be implemented as a modification and modification without departing from the scope of the invention as defined by the statement of the claims.

### [Explanation of Reference Numerals]

10 Pneumatic tire
20 Tread
31, 32 Circumferential direction groove
40 Carcass
50 Belt layer
60 Bead portion
70 Belt reinforcing layer
100, 100 P Block
110 Block portion
120 Inclined width direction groove
121 Narrow groove portion
122 Sipe portion
123 Widened section
130 Inclined width direction groove
131 Narrow groove portion
132 Sipe portion
133 Widened section
150 Block portion
160, 170 Zigzag sipe
200 block
210 Termination groove
220 Width direction groove
230 Circumferential direction notch groove
231 Circumferential direction sipe
250 Zigzag sipe
300 Block
310 Termination groove
320 Width direction groove
330 Circumferential direction notch groove
331 Circumferential direction sipe
350 Zigzag sipe
CL Tire equatorial line
R Rotation direction

## Claims

1. A tire (10) having a tread (20), and a rib-like block (100) partitioned by a first circumferential direction groove (31) extending in a tire circumferential direction and a second circumferential direction groove (32) extending in the tire circumferential direction is provided in a central region in a tire width direction including a tire equatorial line (CL), wherein
a ratio TW/SW of a ground contact width TW of the tire (10) and a maximum width SW of the tire (10) is 0.75 or more and 0.95 or less;
an outside end in the tire width direction of a belt layer (50) including a main belt is positioned outside in the tire width direction than a circumferential direction groove (230, 330) extending in the tire circumferential direction and formed most outside in the tire width direction, wherein
the rib-like block (100) includes:
a first inclined width direction groove (120) extending in a first direction inclined with respect to the tire width direction;
a second inclined width direction groove (130) extending in a second direction inclined to an opposite side of the first inclined width direction groove (120) with respect to the tire width direction;
a first zigzag sipe (160) extending in the first direction and at least a part of which is zigzag on a tread surface view;
a second zigzag sipe (170) extending in the second direction and at least a part of which is zigzag on a tread surface view, and
the first inclined width direction groove (120) includes:
a first narrow groove portion (121) which is linear and narrower than a groove width of the first circumferential direction groove (31) and the second circumferential direction groove (32); and
a first sipe portion (122) which is narrower than a groove width of the first narrow groove portion (121), and
the second inclined width direction groove (130) includes:
a second narrow groove portion (131) which is linear and narrower than a groove width of the first circumferential direction groove (31) and the second circumferential direction groove (32); and
a second sipe portion (132) which is narrower than a groove width of the second narrow groove portion (131), wherein
in the tire circumferential direction, the first inclined width direction groove (120), the plurality of first zigzag sipes (160), the second inclined width direction groove (130), and the plurality of second zigzag sipes (170) are repeatedly formed,
the first inclined width direction groove (120) communicates with the second circumferential direction groove (32),
one end of the first sipe portion (122) communicates with the first narrow groove portion (121), and another end of the first sipe portion terminates in the rib-like block (100) without communicating with the first circumferential direction groove (31),
the second inclined width direction groove (130) communicates with the first circumferential direction groove (31),
one end of the second sipe portion (132) communicates with the second narrow groove portion (131), and another end of the second sipe portion (132) terminates in the rib-like block (100) without communicating with the second circumferential direction groove (32),
the ground contact width of the tire (TW) is the width of the ground contact portion of the tread (20) when the pneumatic tire (10) is set to normal internal pressure and normal load is applied, and
in Japan, the normal internal pressure is the air pressure corresponding to the maximum load capacity in the JATMA YearBook, and the normal load is the maximum load capacity (maximum load) corresponding to the maximum load capacity in the JATMA YearBook, and ETRTO in Europe, TRA in the United States, and other tire standards in other countries correspond to that of Japan.

2. The tire (10) according to claim 1, wherein a first widened section (123) having a widened groove width along the tire circumferential direction is formed at an end of the first narrow groove portion (121) on the first circumferential direction groove side.

3. The tire (10) according to claim 1, wherein a second widened section (133) having a widened groove width along the tire circumferential direction is formed at an end of the second narrow groove portion (131) on the second circumferential direction groove side.

4. The tire (10) according to any one of claims 1 to 3, a first outside block (200) is provided in the tire width direction outside of the rib-like block (100) via the first circumferential direction groove (31), and
a first termination groove (210) communicating with the first circumferential direction groove (31) and terminating in the first outside block (200) is formed in the first outside block (200), wherein
the first termination groove (210) is formed on an extension line along the second inclined width direction groove (130).

5. The tire (10) according to any one of claims 1 to 4, a second outside block (300) is provided in the tire width direction outside of the rib-like block (100) via the second circumferential direction groove (32), and
a second termination groove (310) communicating with the second circumferential direction groove (32) and terminating in the second outside block (300) is formed in the second outside block (300), wherein
the second termination groove (310) is formed on an extension line along the first inclined width direction groove (120).

## Patentansprüche

1. Reifen (10), der eine Lauffläche (20) aufweist, und ein rippenartiger Block (100), abgeteilt durch eine erste Umfangsrichtungsrille (31), die sich in einer Reifenumfangsrichtung erstreckt, und eine zweite Umfangsrichtungsrille (32), die sich in der Reifenumfangsrichtung erstreckt, ist in einem in einer Reifenbreitenrichtung mittigen Bereich, der eine Reifenäquatoriallinie (CL) einschließt, bereitgestellt, wobei
ein Verhältnis TW/SW einer Bodenberührungsbreite TW des Reifens (10) und einer maximalen Breite SW des Reifens (10) 0,75 oder mehr und 0,95 oder weniger beträgt;
ein in der Reifenbreitenrichtung äußeres Ende einer Gürtellage (50), die einen Hauptgürtel einschließt, in der Reifenbreitenrichtung weiter außen positioniert ist als eine Umfangsrichtungsrille (230, 330), die sich in der Reifenumfangsrichtung erstreckt und in der Reifenbreitenrichtung am weitesten außen geformt ist, wobei
der rippenartige Block (100) Folgendes einschließt:
eine erste geneigte Breitenrichtungsrille (120), die sich in einer ersten Richtung erstreckt, die in Bezug auf die Reifenbreitenrichtung geneigt ist;
eine zweite geneigte Breitenrichtungsrille (130), die sich in einer zweiten Richtung erstreckt, die zu einer entgegengesetzten Seite der ersten geneigten Breitenrichtungsrille (120) in Bezug auf die Reifenbreitenrichtung geneigt ist;
eine erste Zickzack-Lamelle (160), die sich in der ersten Richtung erstreckt und von der mindestens ein Teil auf einer Laufflächenansicht zickzackförmig ist;
eine zweite Zickzack-Lamelle (170), die sich in der zweiten Richtung erstreckt und von der mindestens ein Teil auf einer Laufflächenansicht zickzackförmig ist, und
die erste geneigte Breitenrichtungsrille (120) Folgendes einschließt:
einen ersten schmalen Rillenabschnitt (121), der linear und schmaler als eine Rillenbreite der ersten Umfangsrichtungsrille (31) und der zweiten Umfangsrichtungsrille (32) ist; und
einen ersten Lamellenabschnitt (122), der schmaler als eine Rillenbreite des ersten schmalen Rillenabschnitts (121) ist, und
die zweite geneigte Breitenrichtungsrille (130) Folgendes einschließt:
einen zweiten schmalen Rillenabschnitt (131), der linear und schmaler als eine Rillenbreite der ersten Umfangsrichtungsrille (31) und der zweiten Umfangsrichtungsrille (32) ist; und
einen zweiten Lamellenabschnitt (132), der schmaler als eine Rillenbreite des zweiten schmalen Rillenabschnitts (131) ist, wobei
in der Reifenumfangsrichtung, die erste geneigte Breitenrichtungsrille (120), die Vielzahl von ersten Zickzack-Lamellen (160), die zweite geneigte Breitenrichtungsrille, (130) und die Vielzahl von zweiten Zickzack-Lamellen (170) wiederholt geformt sind,
die erste geneigte Breitenrichtungsrille (120) in Verbindung mit der zweiten Umfangsrichtungsrille (32) steht,
ein Ende des ersten Lamellenabschnitts (122) in Verbindung mit dem ersten schmalen Rillenabschnitt (121) steht, und ein anderes Ende des ersten Lamellenabschnitts in dem rippenartigen Block (100) endet, ohne in Verbindung mit der ersten Umfangsrichtungsrille (31) zu stehen,
die zweite geneigte Breitenrichtungsrille (130) in Verbindung mit der ersten Umfangsrichtungsrille (31) steht,
ein Ende des zweiten Lamellenabschnitts (132) in Verbindung mit dem zweiten schmalen Rillenabschnitt (131) steht, und ein anderes Ende des zweiten Lamellenabschnitts (132) in dem rippenartigen Block (100) endet, ohne in Verbindung mit der zweiten Umfangsrichtungsrille (32) zu stehen,
die Bodenberührungsbreite des Reifens (TW) die Breite des Bodenberührungsabschnitts der Lauffläche (20) ist, wenn der Luftreifen (10) auf normalen Innendruck gebracht ist und eine normale Last angewendet wird, und
in Japan der normale Innendruck der Luftdruck ist, welcher der maximalen Tragfähigkeit in dem JATMA YearBook entspricht, und die normale Last die maximale Tragfähigkeit (maximale Last) ist, die der maximalen Tragfähigkeit in dem JATMA YearBook entspricht, und ETRTO in Europa, TRA in den Vereinigten Staaten und andere Reifenstandards in anderen Ländern denjenigen von Japan entsprechen.

2. Reifen (10) nach Anspruch 1, wobei eine erste verbreiterte Sektion (123), die eine verbreiterte Rillenbreite entlang der Reifenumfangsrichtung aufweist, an einem Ende des ersten schmalen Rillenabschnitts (121) auf der Seite der ersten Umfangsrichtungsrille geformt ist.

3. Reifen (10) nach Anspruch 1, wobei eine zweite verbreiterte Sektion (133), die eine verbreiterte Rillenbreite entlang der Reifenumfangsrichtung aufweist, an einem Ende des zweiten schmalen Rillenabschnitts (131) auf der Seite der zweiten Umfangsrichtungsrille geformt ist.

4. Reifen (10) nach einem der Ansprüche 1 bis 3, wobei ein erster Außenseitenblock (200) in der Reifenbreitenrichtung außerhalb des rippenartigen Blocks (100) über die erste Umfangsrichtungsrille (31) bereitgestellt ist, und
eine erste Abschlussrille (210), die in Verbindung mit der ersten Umfangsrichtungsrille (31) steht und in dem ersten Außenseitenblock (200) endet, in dem ersten Außenseitenblock (200) geformt ist, wobei
die erste Abschlussrille (210) auf einer Verlängerungslinie entlang der zweiten geneigten Breitenrichtungsrille (130) geformt ist.

5. Reifen (10) nach einem der Ansprüche 1 bis 4, wobei ein zweiter Außenseitenblock (300) in der Reifenbreitenrichtung außerhalb des rippenartigen Blocks (100) über die zweite Umfangsrichtungsrille (32) bereitgestellt ist, und
eine zweite Abschlussrille (310), die in Verbindung mit der zweiten Umfangsrichtungsrille (32) steht und in dem zweiten Außenseitenblock (300) endet, in dem zweiten Außenseitenblock (300) geformt ist, wobei
die zweite Abschlussrille (310) auf einer Verlängerungslinie entlang der ersten geneigten Breitenrichtungsrille (120) geformt ist.

## Revendications

1. Pneumatique (10) comportant une bande de roulement (20), et un pavé de type nervure (100) divisé par une première rainure dans la direction circonférentielle (31) s'étendant dans une direction circonférentielle du pneumatique, et une deuxième rainure dans la direction circonférentielle (32) s'étendant dans la direction circonférentielle du pneumatique est fourni dans une région centrale, dans une direction de la largeur du pneumatique, incluant une ligne équatoriale du pneumatique (CL), dans lequel
un rapport TW/SW entre une largeur de contact au sol TW du pneumatique (10) et une largeur maximale SW du pneumatique (10) correspond à 0,75 ou plus et à 0,95 ou moins ;
une extrémité extérieure, dans la direction de la largeur du pneumatique, d'une couche de ceinture (50) incluant une ceinture principale, est positionnée plus vers l'extérieur, dans la direction de la largeur du pneumatique, qu'une rainure dans la direction circonférentielle (230, 330) s'étendant dans la direction circonférentielle du pneumatique et formée le plus à l'extérieur, dans la direction de la largeur du pneumatique ; dans lequel
le pavé de type nervure (100) inclut :
une première rainure inclinée dans la direction de la largeur (120) s'étendant dans une première direction inclinée par rapport à la direction de la largeur du pneumatique ;
une deuxième rainure inclinée dans la direction de la largeur (130) s'étendant dans une deuxième direction inclinée vers un côté opposé à la première rainure inclinée dans la direction de la largeur (120) par rapport à la direction de la largeur du pneumatique ;
une première lamelle en zigzag (160) s'étendant dans la première direction et dont au moins une partie a une forme en zigzag dans une vue de la surface de la bande de roulement ;
une deuxième rainure en zigzag (170) s'étendant dans la deuxième direction et dont au moins une partie a une forme en zigzag dans une vue de la surface de la bande de roulement, et
la première rainure inclinée dans la direction de la largeur (120) inclut :
une première partie de rainure étroite (121) qui est linéaire et plus étroite qu'une largeur de rainure de la première rainure dans la direction circonférentielle (31) et de la deuxième rainure dans la direction circonférentielle (32) ; et
une première partie de lamelle (122) qui est plus étroite qu'une largeur de rainure de la première partie de rainure étroite (121), et
la deuxième rainure inclinée dans la direction de la largeur (130) inclut :
une deuxième partie de rainure étroite (131) qui est linéaire et plus étroite qu'une largeur de rainure de la première rainure dans la direction circonférentielle (31) et de la deuxième rainure dans la direction circonférentielle (32) ; et
une deuxième partie de lamelle (132) qui est plus étroite qu'une largeur de rainure de la deuxième partie de rainure étroite (131), dans lequel
dans la direction circonférentielle du pneumatique, la première rainure inclinée dans la direction de la largeur (120), la pluralité de premières lamelles en zigzag (160), la deuxième rainure inclinée dans la direction de la largeur (130), et la pluralité de deuxièmes lamelles en zigzag (170) sont formées de manière répétée,
la première rainure inclinée dans la direction de la largeur (120) communique avec la deuxième rainure dans la direction circonférentielle (32),
une extrémité de la première partie de lamelle (122) communique avec la première partie de rainure étroite (121), et une autre extrémité de la première partie de lamelle se termine dans le pavé de type nervure (100) sans communiquer avec la première rainure dans la direction circonférentielle (31),
la deuxième rainure inclinée dans la direction de la largeur (130) communique avec la première rainure dans la direction circonférentielle (31),
une extrémité de la deuxième partie de lamelle (132) communique avec la deuxième partie de rainure étroite (131), et une autre extrémité de la deuxième partie de lamelle (132) se termine dans le pavé de type nervure (100) sans communiquer avec la deuxième rainure dans la direction circonférentielle (32),
la largeur de contact au sol du pneumatique (TW) constitue la largeur de la partie de contact au sol de la bande de roulement (20) lorsque le pneumatique (10) est ajusté à une pression interne normale, et une charge normale y est appliquée, et
au Japon, la pression interne normale est la pression d'air correspondant à la capacité de charge maximale dans le JATMA YearBook, et la charge normale est la capacité de charge maximale (charge maximale) correspondant à la capacité de charge maximale dans le JATMA YearBook, et ETRTO en Europe, TRA aux Etats-Unis et d'autres normes pour pneumatiques dans d'autres pays correspondent à celle du Japon.

2. Pneumatique (10) selon la revendication 1, dans lequel une première section élargie (123), comportant une largeur de rainure élargie le long de la direction circonférentielle du pneumatique, est formée au niveau d'une extrémité de la première partie de rainure étroite (121) sur le côté de la première rainure dans la direction circonférentielle.

3. Pneumatique (10) selon la revendication 1, dans lequel une deuxième section élargie (133), ayant une largeur de rainure élargie le long de la direction circonférentielle du pneumatique, est formée au niveau d'une extrémité de la deuxième partie de rainure étroite (131) sur le côté de la deuxième rainure dans la direction circonférentielle.

4. Pneumatique (10) selon l'une quelconque des revendications 1 à 3, dans lequel une premier pavé extérieur (200) est fourni, dans la direction de la largeur du pneumatique, à l'extérieur du pavé de type nervure (100) *via* la première rainure dans la direction circonférentielle (31), et
une première rainure de terminaison (210) communiquant avec la première rainure dans la direction circonférentielle (31) et se terminant dans le premier pavé extérieur (200), est formée dans le premier pavé extérieur (200), dans lequel
la première rainure de terminaison (210) est formée sur une ligne d'extension le long de la deuxième rainure inclinée dans la direction de la largeur (130).

5. Pneumatique (10) selon l'une quelconque des revendications 1 à 4, dans lequel un deuxième pavé extérieur (300) est fourni, dans la direction de la largeur du pneumatique, à l'extérieur du pavé de type nervure (100) *via* la deuxième rainure dans la direction circonférentielle (32), et
une deuxième rainure de terminaison (310) communiquant avec la deuxième rainure dans la direction circonférentielle (32) et se terminant dans le deuxième pavé extérieur (300) est formée dans le deuxième pavé extérieur (300), dans lequel
la deuxième rainure de terminaison (310) est formée sur une ligne d'extension le long de la première rainure inclinée dans la direction de la largeur (120).
